# FASCICULE DE BREVET EUROPEEN

(11) **EP 2 578 451 B1**
(45) Date de publication et mention de la délivrance du brevet: **18.09.2013**
(21) Numéro de dépôt: 12186748.5
(22) Date de dépôt: 01.10.2012
(51) Int. Cl.: B60Q 1/076, B60Q 1/10, B60Q 1/12

(54) **Actionneur pour phare de véhicule**
Stellglied für Fahrzeugscheinwerfer
Actuator for vehicle headlight

(30) Priorité: 03.10.2011 FR 1158886
(43) Date de publication de la demande: 10.04.2013
(73) Titulaire: Société Industrielle de Sonceboz S.A., 2605 Sonceboz (CH)
(72) Inventeur: Fournier, Stéphane, 25310 ABBEVILLERS (FR); Habegger, Christophe, 2732 Reconvilier (CH)
(74) Mandataire: reuteler & cie SA

(56) Documents cités:
- EP-A1- 1 270 323
- EP-A2- 1 431 118
- DE-A1- 19 810 480
- US-A- 3 075 073
- US-A- 3 259 738

## Description

La présente invention concerne un actionneur pour phares de véhicules, notamment pour phares à diodes lumineuses.

Il est connu d'utiliser des actionneurs linéaires ou rotatifs pour le réglage de la position horizontale ou verticale de phares automobiles. Le réglage de la hauteur de projection du phare existe depuis longtemps et est destiné à ajuster la projection des phares en fonction de la charge dans un véhicule, afin de ne pas éblouir les usagers de la route venant en sens contraire. L'ajustement de la direction dans le plan horizontal du phare est destiné à mieux éclairer la route dans un virage, la direction des phares changeant en fonction de la trajectoire de la voiture. L'ajustement de l'inclinaison mais surtout le changement de direction des phares peut-être très dynamique et nécessite donc des entraînements performants et fiables. Typiquement, les positionnements latéral et vertical sont effectués par deux actionneurs distincts et deux mécanismes distincts. Avec l'avènement des sources lumineuses très compactes, tels que les diodes lumineuses (LED, acronyme pour le terme en anglais « Light Emitting Diode »), les véhicules sont souvent disposés d'une pluralité de phares, chacune fonctionnant selon le besoin et commandé soit par le l'utilisateur soit automatiquement. Certain phares peuvent être pour l'éclairage de la route, d'autres pour l'éclairage latéral, le tout formant un profile d'éclairage complexe tenant compte de l'assise de la voiture et de sa direction, ou encore d'autres conditions comme la luminosité ambiante ou la présence de voitures venant en contresens.

Les systèmes d'actionnement de phares conventionnels pour le positionnement dynamique de phares sont encombrants et limitent la flexibilité en ce qui concerne le design des phares, mais augmentent également les coûts.

Un objet de l'invention est de fournir un actionneur pour phares qui est compact, léger et performant.

Il est avantageux de fournir un actionneur pour phares qui permet un positionnement dynamique très rapide et précis.

Il est avantageux de fournir un actionneur pour phares qui est fiable et peu coûteux.

Des objets de l'invention sont réalisés par un actionneur de phare de véhicule selon la revendication 1.

Dans la présente, on décrit un actionneur de phare de véhicule comprenant un boîtier, au moins une platine support pour une ou plusieurs sources lumineuses, formant ou faisant partie d'un phare, la platine montée pivotante par rapport au boîtier autour d'un pivot, un système d'actionnement d'inclinaison comprenant un moteur et un mécanisme de déplacement ayant une tige d'actionnement d'inclinaison couplée à la platine de support et configurée pour pivoter la platine de support autour du pivot, et un système d'actionnement de direction. Le système d'actionnement de direction comprend un moteur avec un rotor comprenant une partie de roue, et un organe rotatif sur laquelle la platine de support est montée à travers ledit pivot, l'organe rotatif comprenant une partie de roue engageant la partie de roue du rotor pour effectuer un déplacement angulaire de l'organe rotatif dans une direction orthogonale à une direction axiale A de déplacement du mécanisme de déplacement du système d'actionnement d'inclinaison. L'organe rotatif comprend une partie de pivot montée de manière pivotante autour de la tige du mécanisme de déplacement.

Dans une forme d'exécution avantageuse, le mécanisme de déplacement comprend un système vis-écrou comprenant une vis faisant partie de la tige et un écrou entraîné par le moteur.

Dans une forme d'exécution avantageuse, l'actionneur comprend au moins un palier disposé entre une partie du boitier et la partie de pivot. L'Actionneur peut aussi comprendre au moins un palier disposé entre la partie de pivot et l'écrou du système vis-écrou.

Dans une variante, le boîtier comprend une paroi de support interne comprenant une partie tubulaire formant un palier configuré pour former un palier pour la partie de pivot interne de l'organe rotatif et pour permettre l'extension de la vis à travers la paroi de support interne.

La tige du système d'actionnement d'inclinaison peut avantageusement être couplée à la platine de support au moyen d'un accouplement comprenant une glissière configurée pour permettre la translation de la platine de support par rapport à la tige.

Dans une forme d'exécution avantageuse, l'accouplement reliant la tige du système d'actionnement d'inclinaison à la platine de support, comprend une rotule configurée pour permettre la rotation en toutes directions de la platine de support par rapport à la tige.

Dans une variante, l'accouplement pivotant du système d'actionnement d'inclinaison peut comprendre une partie de calotte sphérique et des bras élastiques solidaires de la partie de calottes pour clipser la rotule.

Dans une forme d'exécution, le rotor du système d'actionnement de direction comprend une partie de roue, et l'organe rotatif comprend une partie de roue complémentaire engagée par la partie de roue du rotor, les parties de roue étant dentées, pour la rotation de l'organe rotatif.

Dans une forme d'exécution, le déplacement de la vis est configuré par rapport au pivot pour effectuer un angle d'inclinaison de la platine de support d'un angle -γ, +γ, la valeur 2γ étant entre 10° et 20° , et l'organe rotatif est configuré pour un déplacement angulaire entre deux positions extrêmes -α, +α, la valeur angulaire 2α étant entre 30° et 40°.

Les moteurs du système d'actionnement d'inclinaison et du système d'actionnement de direction peuvent avantageusement comprendre un stator solidaire commun formant une pièce unique montée sur une base du boîtier.

Les moteurs du système d'actionnement d'inclinaison et du système d'actionnement de direction peuvent avantageusement être des moteurs pas-à-pas comprenant des rotors avec des aimants permanents.

Le système vis-écrou comprend un écrou qui peut être solidaire du rotor et la vis comprend des moyens anti-rotation pour assurer son déplacement linéaire le long d'un axe A coopérant avec des moyens anti-rotation sous forme d'une glissière qui peut avantageusement faire partie du boîtier.

Dans une forme d'exécution, l'organe rotatif est monté en sandwich entre un couvercle du boîtier et une paroi de support interne du boîtier, l'organe rotatif et/ou le couvercle et la paroi interne comprenant des protubérances formant des paliers pour permettre le glissement angulaire de l'organe rotatif par rapport au boîtier, mais fixant sa position axiale.

L'actionneur peut avantageusement comprendre une électronique de commande comprenant avantageusement une plaquette de circuit disposée au fond d'une base du boîtier, sous le stator et rotor des systèmes d'actionnement. L'organe rotatif peut avantageusement comprendre un ou plusieurs éléments de capteur de position s'étendant en direction du fond du boîtier, un capteur de position étant disposé sur la plaquette de circuit de l'électronique de commande.

La platine de support comprend avantageusement des aubes formant un radiateur pour le refroidissement du phare, le radiateur étant disposé du côté opposé aux sources lumineuses.

D'autres buts et aspects avantageux de l'invention apparaitront à la lecture des revendications, ainsi que de la description détaillée de formes d'exécution ci-après, et des dessins annexés, dans lesquels :
La Fig. 1 est une vue en coupe d'un actionneur pour phares selon une forme d'exécution de l'invention ;
La Fig. 2 est une vue en perspective d'un actionneur pour phares selon une forme d'exécution de l'invention ;
Les Figs. 3a à 3c sont des vues de l'actionneur montrant différentes positions du système d'inclinaison du phare ;
Les Figs. 4a à 4c sont des vues de l'actionneur montrant différentes positions du système de direction latérale du phare ;
La Fig. 5 est une vue en perspective de l'actionneur sans couvercle de boîtier et sans platine de support de phare ;
La Fig. 6a est une vue en coupe d'un actionneur pour phares selon une autre forme d'exécution de l'invention ;
La Fig. 6b est une vue en perspective et en coupe partielle de l'actionneur pour phares de la figure 6a ;
La Fig. 6c est une vue en perspective de l'actionneur de la figure 6a sans platine de support et sans couvercle de boîtier pour illustrer des composants à l'intérieur du boitier.

Faisant référence aux figures, un actionneur pour phare 1, selon formes d'exécution de l'invention, comprend un boîtier 2, une platine de support 3 pour une ou plusieurs sources lumineuses 8, un système d'actionnement d'inclinaison 4, un système d'actionnement de direction 5, notamment de direction latérale, un accouplement 6 couplant le système d'actionnement d'inclinaison à la platine de support 3, une électronique de commande 7 étant disposée dans le boîtier, et un ou plusieurs sources lumineuses, notamment des LED, formant ou faisant partie d'un phare 8, montés sur la platine de support 3.

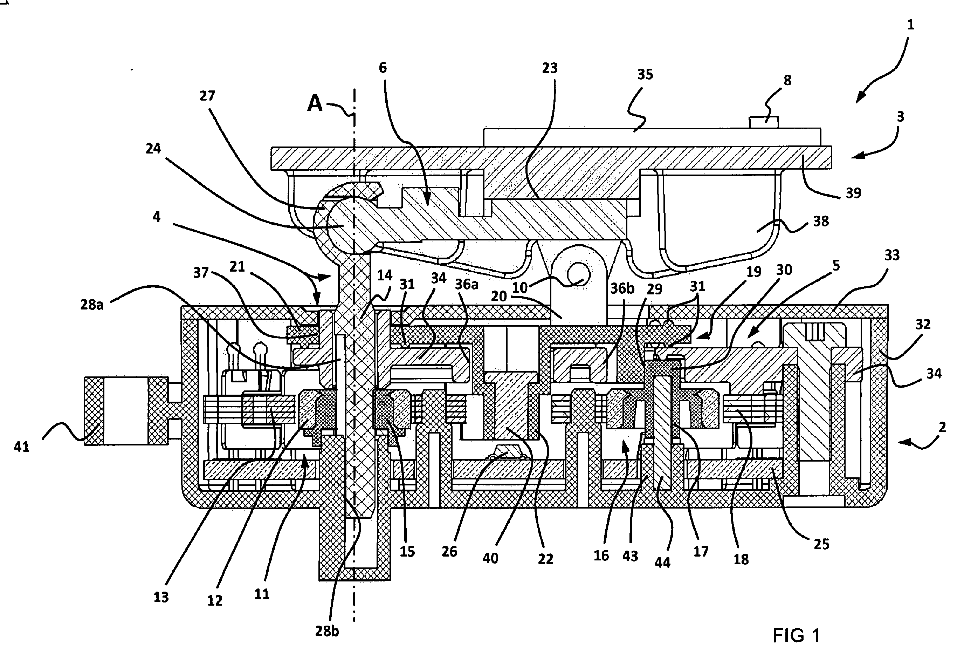

Le boîtier 2 comprend une base 32 et un couvercle 33. Dans la variante de la figure 1 le boîtier peut comprendre en outre une paroi support interne 34. Le boîtier peut aussi comprendre des moyens du support externe 40, tel qu'illustrés dans les figures 1 à 4, pour la fixation sur un châssis ou autre élément de l'automobile.

La platine de support 3 comprend une base 39 sur laquelle au moins une source lumineuse formant un phare, ou formant une partie d'un phare, est montée. Dans une forme d'exécution préférée, il s'agit d'un phare LED (Light Emitting Diode), la base 39 pouvant servir également au support d'une plaquette de circuit 35 pour le phare LED. Par phare LED on sous-entend une pluralité de diodes lumineuses disposées sur la plaquette 35 ou sur la base 39 dans n'importe quelle configuration voulue. La base 39 est illustrée sous forme plane, mais elle peut également être courbe ou prendre toute forme tridimensionnelle souhaitée pour le phare LED. La platine de support 3 peut avantageusement être munie d'un radiateur 38 ou tout autre système de refroidissement pour dégager l'énergie thermique générée par la ou les sources lumineuses, le radiateur étant formé d'une pluralité d'aubes pour une évacuation de la chaleur par convection.

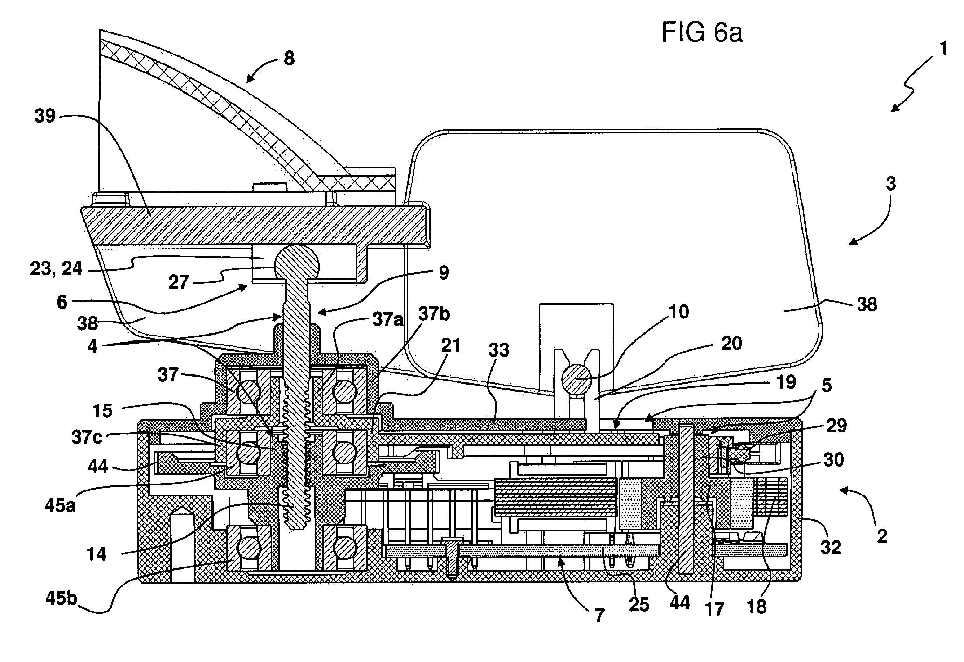

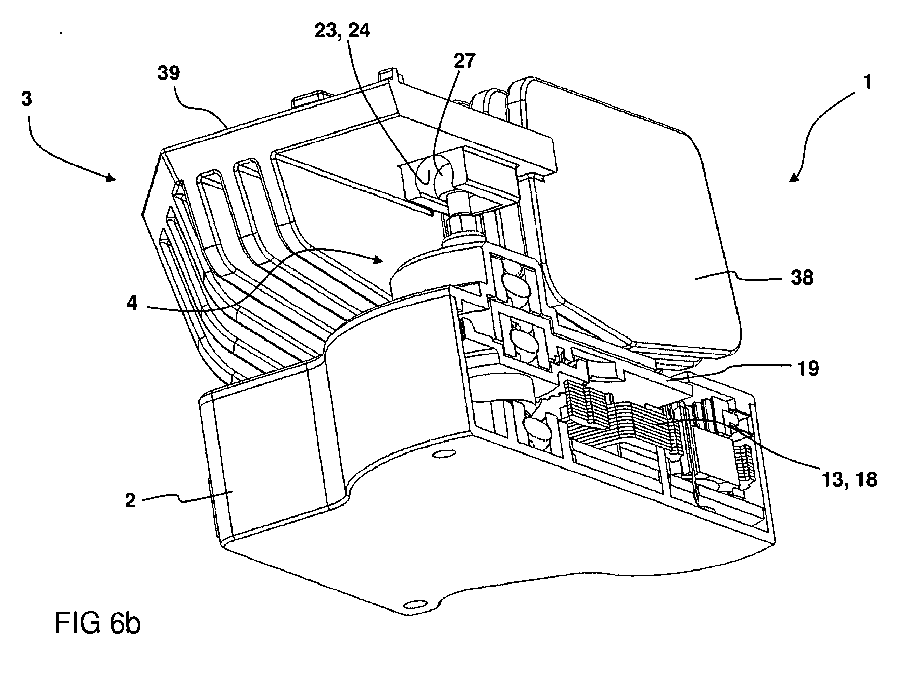

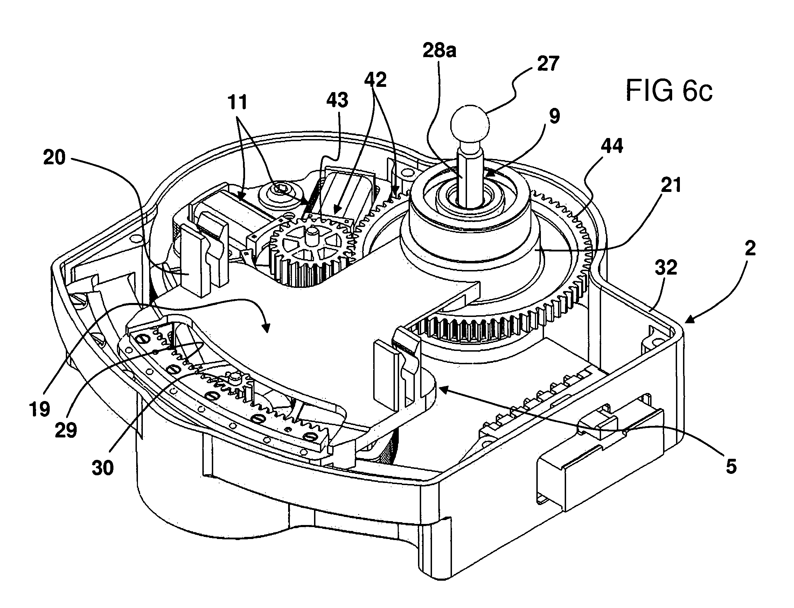

La platine de support 3 est couplée et montée sur le système d'actionnement de direction 5 au moyen d'un pivot 10, la platine de support 3 étant couplée au système d'actionnement d'inclinaison 4 à travers l'accouplement 6 comprenant une partie 23 permettant la translation relative à la platine et une partie 24 permettant la rotation relative au système d'actionnement d'inclinaison 4. La partie en translation 23 peut avantageusement être sous forme d'une glissière qui permet à la platine de se déplacer selon un axe de glissement par rapport au système d'actionnement d'inclinaison 4. La partie en rotation, qui peut avantageusement être sous forme d'une rotule 24 (variante figure 1) ou une partie complémentaire à une rotule (variante figure 6a, 6b), est couplée à une tige 9 du système d'actionnement d'inclinaison 4 pour pouvoir pivoter la platine de support 3 autour du pivot 10 ainsi qu'autour de l'axe de la tige d'actionnement d'inclinaison 9.

Le système d'actionnement d'inclinaison 4 comprend un moteur 11 avec un rotor 12 et un stator 13, et un mécanisme de déplacement comprenant la tige d'actionnement d'inclinaison 9 actionnée en déplacement par le moteur pour pivoter la platine de support 3 autour du pivot 10.

De préférence, le mécanisme de déplacement est sous forme d'un système vis-écrou comprenant une vis 14 faisant partie de la tige 9 et un écrou 15. L'écrou peut être solidaire du rotor 12, ou couplé au rotor à travers un entrainement tel qu'un système d'engrenages, notamment un système d'engrenages réducteur. Dans l'exemple illustré à la figure 6a, 6b, l'entrainement 42 comprend un pignon 43 monté sur l'axe de sortie du rotor, engageant une roue dentée 44 solidaire de l'écrou 15 du système vis-écrou.

La tige 9 peut, dans une variante, aussi être sous forme d'une crémaillère actionnée par une roue sans fin couplé au moteur. La tige 9 peut aussi être couplée au moteur 11 par d'autres entrainements connus en soi.

La vis 14 comprend une glissière anti-rotation 28a coopérant avec une glissière complémentaire 28b du boîtier 2 qui bloque la rotation de la vis lors de la rotation de l'écrou 15, assurant un déplacement linéaire de la vis selon la direction d'un axe A de rotation du rotor. Le déplacement de la vis 14 le long de l'axe A commande l'inclinaison du phare, c'est-à-dire le pivotement de la platine de support 3 autour du pivot 10.

A son extrémité, la tige 9 comprend une tête d'accouplement pivotant 27 couplée à la platine de support. Dans la variante illustrée à la figure 1 la tête d'accouplement pivotant 27 est sous forme d'une calotte dans laquelle la rotule 24 de la partie d'accouplement de la platine est logée de manière glissante. Dans la variante illustrée à la figure 6a, la tête d'accouplement pivotant 27 est sous forme d'une rotule logée dans la glissière 23, 24 formant la partie d'accouplement de la platine.

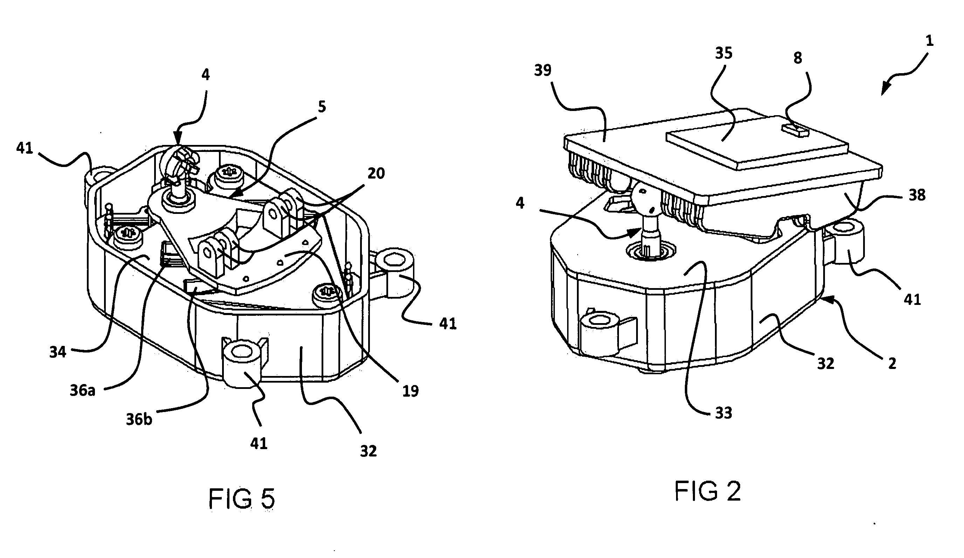

Faisant référence à la variante des figures 1 et 5, la rotule 24 peut avoir une forme au moins partiellement sphérique et être clipsée dans l'ouverture complémentaire formée par la tête d'accouplement pivotant 27 munie de bras élastiques pour prendre en prise la rotule 24. L'accouplement 6 permet donc à la platine de pivoter verticalement ainsi que latéralement par rapport à la tige 9. La glissière 23 permet de compenser la distance entre la tête d'accouplement 27 se déplaçant sur l'axe A lors du déplacement de la vis 14, par rapport à la position de la platine de support 3 maintenue par le pivot 10.

Dans les formes d'exécution illustrées, le moteur 11 du système d'actionnement d'inclinaison comprend un rotor 12 avec des aimants permanents entrainé par un stator avec des bobines, formant de préférence un moteur pas-à-pas. De tels moteurs étant connus en tant que tels, ils ne seront pas décrits plus en détail. D'autres types de moteur peuvent aussi être utilisés dans la mesure où on peut les commander pour effectuer un nombre de rotations déterminées et ensuite maintenir une position à l'arrêt pour le positionnement dynamique et statique en inclinaison du phare.

Le système d'actionnement de direction 5 comprend un moteur 16 avec un rotor 17 et un stator 18, ce moteur pouvant être essentiellement de même construction que le moteur 11 du système d'actionnement d'inclinaison, ou un système différent. Le stator 18 peut être solidaire du stator 13, les deux stators formant une seule pièce assemblée dans le boîtier afin de réduire les frais de construction et d'assemblage, mais il est également possible d'avoir des stators séparés. Le système d'actionnement de direction comprend une partie de roue 30, notamment une partie de roue dentée, dé préférence solidaire du rotor, engageant un organe rotatif 19 du système d'actionnement de direction. L'organe rotatif 19 comprend une partie de support de platine pivotant 20 dans laquelle le pivot 10 est monté pour supporter la platine 3 de manière pivotante, et une partie de pivot 21 pour la rotation α de l'organe rotatif autour de l'axe A de la tige 9.

L'organe rotatif peut en outre comprendre une partie de support 22 d'un capteur de position et des paliers ou éléments de positionnement 31 pour guider et permettre la rotation de l'organe rotatif 19 dans le boîtier tel qu'illustré à la figure 1. Les éléments de positionnement 31 sont disposés entre le couvercle 33 et la paroi de support interne 34. Les paliers 31 peuvent être sous forme de simples protubérances, rondes ou sphériques, positionnant l'organe rotatif 19 dans le sens axial mais permettant une rotation de l'organe rotatif 19 autour de l'axe A.

La partie de roue 29 de l'organe rotatif 19 engage la partie de roue 30 couplée au rotor 17 pour la rotation de l'organe rotatif 19 entre des positions angulaires extrêmes illustrées dans les Figs. 2a à 2c par les angles -α et +α autour d'une position médiane. La position médiane forme un point de référence qui peut être déterminé par un capteur de position 26 monté sur une plaquette de circuit 25 de l'électronique de commande 7 pour calibrer la rotation latérale. Le capteur de position peut par exemple être sous forme d'un capteur à effet Hall 26 dans le boîtier, par exemple sur une plaquette de circuit de l'électronique de commande 7, détectant la présence d'un aimant ou d'un fer 40 monté dans la partie de support 22 du capteur de position de l'organe rotatif 19. Au lieu d'être dans la position médiane, le capteur 26, 40 peut être dans toute autre position servant de position de référence pour calibrer l'actionneur lors d'une mise en route ou à tout autre moment de contrôle souhaitée ou prédéterminée. La position de référence peut aussi être déterminée par la rotation de l'organe rotatif 19 en butée d'un côté et/ou de l'autre.

Des réducteurs, par exemple à engrenages, peuvent être insérés entre la sortie des moteurs et les systèmes d'inclinaison ou de direction afin de réaliser le mouvement au point de travail optimum.

Dans les formes d'exécution illustrées, il y a deux parties de support de platine pivotant 20, mais il peut y en avoir plus ou simplement une seule partie de support de platine pivotant, selon les variantes.

Faisant référence aux figures 1 et 5, un orifice 36a dans la paroi interne 34 permet l'extension et le déplacement de l'élément de capteur 40 à travers la paroi interne. Un orifice 36b est également disposé dans la paroi interne 34 pour l'extension de la partie de roue 29 à travers la paroi interne pour accéder à la partie de roue 30 du rotor.

Les parties de roues 29, 30, peuvent êtres dentées, mais peuvent également être sous d'autres formes, par exemple munie de surfaces rugueuses ou non-glissantes pour transmettre la force de couple du moteur à l'organe rotatif pour son déplacement. De préférence, les surfaces des parties de roue 29, 30, sont dentées afin d'assurer un déplacement sans aucun glissement possible.

Dans la variante illustrée dans la figure 1, la paroi interne 34 comprend une partie tubulaire s'étendant dans la direction axiale A et formant un palier 37 pour guider la rotation de l'organe rotatif 19, et permettant en même temps le passage de la tige 9 ou de la vis 14 à travers la paroi interne.

Dans la variante illustrée dans la figure 6a, un palier 37, par exemple sous forme d'un roulement à billes, est monté entre une partie tubulaire 37a du couvercle 33 s'étendant dans la direction axiale A et une partie tubulaire 37b coaxiale de l'organe rotatif 19, pour guider la rotation de l'organe rotatif 19. Un palier 45a, par exemple sous forme d'un roulement à billes peut en outre être disposé entre une deuxième partie tubulaire 37c de l'organe rotatif 19 et l'écrou 15. L'écrou, ainsi que la roue d'engrenage solidaire de l'écrou, peuvent en outre être supportés par un autre palier 45b monté sur la base du boîtier.

L'organe rotatif 19 comprend donc un palier pour la rotation du phare dans la direction latérale, disposé autour de la tige 19 du système d'actionnement d'inclinaison. Cela permet de fournir un actionneur très compacte et économe, mais offrant une grande flexibilité de déplacement.

Avantageusement, l'électronique de commande 7 comprenant la plaquette de circuit 25 permet d'effectuer un traitement de données pour la commande des deux systèmes d'actionnement 4, 5, les stators 13, 18, et l'électronique de commande 7 étant montés dans un boîtier commun pour le déplacement d'une platine de support 3 en deux directions, notamment les directions verticale et latérale, dans une forme très compacte et économe, avec peu de pièces, mais offrant une grande flexibilité de déplacement.

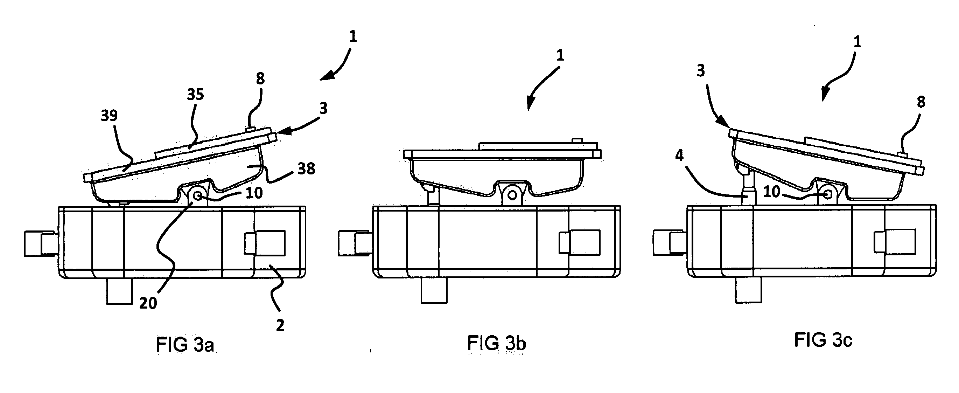

Dans les figures 3a à 3c, on illustre des positions extrêmes de l'angle d'inclinaison γ de la platine de support 3 et la position médiane. Les angles d'inclinaison - y et + γ étant situés entre -6 à -10° jusqu'à +6 et + 10 °, par exemple pour atteindre -8 à +8°.

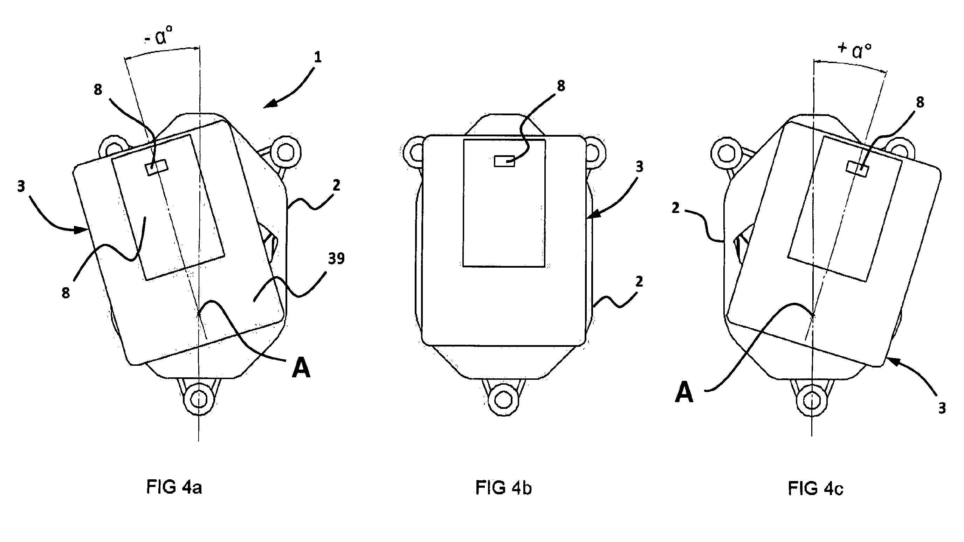

Dans la forme d'exécution illustrée dans les figures 4a à 4c, les positions extrêmes -α et +α de l'angle latéral vont de préférence entre -15 et -20° jusqu'à +15 à +20°, par exemple de -7 à +7°.

Les deux moteurs 11, 16 sont configurés pour pouvoir être en opération simultanément ou séparément, de façon à pouvoir incliner la platine et changer sa direction simultanément ou séparément, selon les besoins. En utilisant des moteurs pas-à-pas, on peut facilement réaliser le positionnement et l'arrêt des moteurs pour le maintien de n'importe quelle position d'inclinaison ou de direction de la platine. Les gammes d'angles de -α et +α et de - γ et + γ peuvent être effectuées de manière facile et fiable. L'accouplement 6, la vis 4, le boîtier 2 avec sa base 32, le couvercle 33 et la paroi interne 34, ainsi que l'organe rotatif 19 peuvent être tous fabriqués en matières plastiques, par exemple en matière plastique injectée pour une construction très légère et économe. La platine de support peut prendre différentes formes, soit planes soit courbes, pour le positionnement selon le cahier des charges et les designs voulus de l'arrangement des phares sur la platine. La plaquette de circuit 25 de l'électronique de commande 7 peut être avantageusement assemblée et disposée au fond de la base 32 du boîtier, les autres composants, notamment le stator 13, 18 et la paroi interne 34 étant également assemblés axialement dans la base du boîtier 32, le stator étant fixé et positionné par des pins de positionnement 42 solidaires de la base 32. Le boîtier peut aussi comprendre des moyens de guidage ou former des paliers, par exemple le palier 43 pour l'axe 44 du rotor 17 ou pour recevoir l'extension de la vis 14, et fournir en même temps les moyens d'anti-rotation engageant la vis.

La platine de support 3 peut être faite en un matériau qui est un bon conducteur thermique dans le cas où un dégagement de chaleur thermique générée par les phares 8 est nécessaire, selon les besoins. Sinon, la platine de support peut également être faite en une manière plastique ou en d'autres matériaux.

### Liste de références

1 actionneur de phare
2 boîtier
   32 base
   33 couvercle
      37b partie tubulaire (support de palier)
   34 paroi support interne
      36 orifices 37b partie tubulaire pour palier
   41 moyens de support externe
3 platine support
   39 base
   10 pivot
   38 radiateur
4 système d'actionnement d'inclinaison
   11 moteur
      12 rotor 13 stator
   42 entrainement (réducteur)
      43 pignon
      44 roue dentée mécanisme de déplacement
   9 tige d'actionnement d'inclinaison
      27 tête d'accouplement
      14 vis (système vis-écrou)
         28 , 28a, 28b glissière anti rotation
   15 écrou (système vis-écrou)
   45a, 45b paliers (pour écrou)
5 système d'actionnement de direction
   16 moteur
      17 rotor
         30 partie de roue
      18 stator
   19 organe rotatif
      20 partie de support platine pivotant
      21 partie de pivot
         37a partie tubulaire (support de palier)
         37c deuxième partie tubulaire (support de palier)
      22 partie de support capteur de position
         40 élément de capteur
         29 partie de roue
         31 paliers axiaux
6 accouplement
   23 partie translation (glissière)
   24 partie rotation
7 électronique de commande
   25 circuit imprimé
   26 capteur
8 phare
   35 plaquette de circuit

## Revendications

1. Actionneur pour phare de véhicule (1) comprenant un boîtier (2), au moins une platine de support (3) pour une ou plusieurs sources lumineuses, la platine montée pivotante par rapport au boîtier autour d'un pivot (10), et un système d'actionnement d'inclinaison (4) comprenant un moteur (11) et un mécanisme de déplacement, le mécanisme de déplacement comprenant une tige d'actionnement d'inclinaison (9) étant couplée à la platine de support (3) et configurée pour pivoter la platine de support autour du pivot (10), l'actionneur comprenant en outre un système d'actionnement de direction (5) comprenant un moteur (16) avec un rotor (17) comprenant une partie de roue, et un organe rotatif (19) sur lequelle la platine de support (3) est montée à travers ledit pivot (10), l'organe rotatif comprenant une partie de roue (29) couplé à la partie de roue (30) du rotor (17) pour effectuer un déplacement angulaire de l'organe rotatif (19) dans une direction orthogonale à une direction axiale (*A*) de déplacement de la tige d'actionnement d'inclinaison, **caractérisé en ce que** l'organe rotatif (19) comprend une partie de pivot (21) montée de manière pivotante autour de la tige d'actionnement d'inclinaison (9).

2. Actionneur selon la revendication 1, **caractérisé en ce que** le mécanisme de déplacement comprend un système vis-écrou comprenant une vis (14) formant une partie de la tige d'actionnement (9) et un écrou (15) entraîné par le moteur (11).

3. Actionneur selon la revendication 2, **caractérisé en ce que** la vis comprend des moyens anti-rotation pour assurer son déplacement linéaire le long d'un axe A coopérant avec des moyens anti-rotation sous forme d'une glissière faisant partie du boîtier (2).

4. Actionneur selon la revendication 2 ou 3, **caractérisé en ce qu'il** comprend au moins un palier (37) disposé entre une partie du boitier et la partie de pivot (21).

5. Actionneur selon la revendication précédente, **caractérisé en ce qu'il** comprend au moins un palier (45a) disposé entre la partie de pivot (21) et l'écrou.

6. Actionneur selon l'une des revendications précédentes, **caractérisé en ce que** l'accouplement (6), reliant la tige (9) du système d'actionnement d'inclinaison (4) à la platine de support (3), comprend une rotule (24, 27) configurée pour permettre la rotation en toutes directions de la platine de support par rapport à la tige.

7. Actionneur selon l'une des revendications précédentes, **caractérisé en ce que** le mécanisme de déplacement du système d'actionnement d'inclinaison (4) est couplé à la platine de support (3) au moyen d'un accouplement (6) comprenant une glissière (23) configurée pour permettre la translation de la platine de support par rapport à l'accouplement (6).

8. Actionneur selon l'une des revendications précédentes, **caractérisé en ce que** les parties de roue du rotor (17) du système d'actionnement de direction et de l'organe rotatif (19) sont dentées.

9. Actionneur selon l'une des revendications précédentes, **caractérisé en ce que** l'organe rotatif est configuré pour un déplacement angulaire entre deux positions extrêmes -α, +α, la valeur angulaire 2α étant entre 30 et 40°.

10. Actionneur selon l'une des revendications précédentes, **caractérisé en ce que** le déplacement du mécanisme de déplacement (14) est configuré par rapport au pivot (10) pour effectuer un angle d'inclinaison de la platine de support (3) d'un angle -γ, +γ, la valeur 2γ étant entre 10 et 20°.

11. Actionneur selon l'une des revendications précédentes, **caractérisé en ce que** les moteurs (11, 16) du système d'actionnement d'inclinaison (4) et du système d'actionnement de direction (5) comprennent un stator (13, 18) solidaire et formant une pièce unique montée dans une base du boîtier, le stator étant fixé par rapport à la base du boîtier.

12. Actionneur selon l'une des revendications précédentes, **caractérisé en ce que** les moteurs (11, 16) du système d'actionnement d'inclinaison et du système d'actionnement de direction sont des moteurs pas-à-pas comprenant des rotors (12, 17) avec des aimants permanents.

13. Actionneur selon l'une des revendications précédentes, **caractérisé en ce que** l'organe rotatif comprend un ou deux éléments de capteur de position s'étendant en direction du fond du boîtier, l'actionneur comprenant en outre une électronique de commande (7) comprenant ces capteurs de position (28).

14. Actionneur selon l'une des revendications précédentes, **caractérisé en ce qu'il** comprend une électronique de commande comprenant une plaquette de circuit (25) disposée au fond d'une base (32) du boîtier (2), sous le stator et rotor des systèmes d'actionnement.

15. Actionneur selon l'une des revendications précédentes, **caractérisé en ce que** la platine de support comprend des aubes formant un radiateur (38) pour le refroidissement des sources lumineuses, le radiateur étant disposé du côté opposé aux sources lumineuses.

## Patentansprüche

1. Stellglied für Fahrzeugscheinwerfer (1), das ein Gehäuse (2), mindestens eine Stützplatte (3) für eine oder mehrere Lichtquellen, wobei die Platte im Verhältnis zum Gehäuse um einen Drehzapfen (10) drehbar montiert ist, und ein Betätigungssystem der Neigung (4) umfasst, das einen Motor (11) und einen Verlagerungsmechanismus umfasst, wobei der Verlagerungsmechanismus eine Betätigungsstange der Neigung (9) umfasst, die mit der Stützplatte (3) verbunden ist und konfiguriert, um die Stützplatte um den Drehzapfen (10) zu drehen, wobei das Stellglied ferner ein Betätigungssystem der Richtung (5) umfasst, das einen Motor (16) mit einem Rotor (17) umfasst, der einen Radabschnitt umfasst, und ein Rotationsorgan (19), auf dem die Stützplatte (3) durch den Drehzapfen (10) montiert ist, wobei das Rotationsorgan einen Radabschnitt (29) umfasst, der an den Radabschnitt (30) des Rotors (17) gekoppelt ist, um eine Winkelverlagerung des Rotationsorgans (19) in eine Richtung orthogonal zu einer axialen Verlagerungsrichtung (A) der Betätigungsstange der Neigung durchzuführen, **dadurch gekennzeichnet, dass** das Rotationsorgan (19) einen Drehzapfenabschnitt (21) umfasst, der drehbar um die Betätigungsstange der Neigung (9) montiert ist.

2. Stellglied nach Anspruch 1, **dadurch gekennzeichnet, dass** der Verlagerungsmechanismus ein Schraube-Mutter-System umfasst, das eine Schraube (14) umfasst, die einen Abschnitt der Betätigungsstange (9) bildet und eine Mutter (15), die von dem Motor (11) angetrieben wird.

3. Stellglied nach Anspruch 2, **dadurch gekennzeichnet, dass** die Schraube Anti-Rotationsmittel umfasst, um ihre lineare Verlagerung entlang einer Achse A sicherzustellen, die mit Anti-Rotationsmitteln in Form einer Gleitschiene zusammenarbeitet, die Teil des Gehäuses (2) ist.

4. Stellglied nach Anspruch 2 oder 3, **dadurch gekennzeichnet, dass** es mindestens ein Lager (37) umfasst, das zwischen einem Abschnitt des Gehäuses und dem Drehzapfenabschnitt (21) angeordnet ist.

5. Stellglied nach vorangehendem Anspruch, **dadurch gekennzeichnet, dass** es mindestens ein Lager (45a) umfasst, das zwischen dem Drehzapfenabschnitt (21) und der Mutter angeordnet ist.

6. Stellglied nach einem der vorangehenden Ansprüche, **dadurch gekennzeichnet, dass** die Kupplung (6), die die Stange (9) des Betätigungssystems der Neigung (4) mit der Stützplatte (3) verbindet, ein Kugelgelenk (24, 27) umfasst, das konfiguriert ist, um die Rotation der Stützplatte im Verhältnis zur Stange in alle Richtungen zu erlauben.

7. Stellglied nach einem der vorangehenden Ansprüche, **dadurch gekennzeichnet, dass** der Verlagerungsmechanismus des Betätigungssystems der Neigung (4) an die Stützplatte (3) mittels einer Kupplung (6) gekoppelt ist, die eine Gleitschiene (23) umfasst, die konfiguriert ist, um die Verschiebung der Stützplatte im Verhältnis zur Kupplung (6) zu erlauben.

8. Stellglied nach einem der vorangehenden Ansprüche, **dadurch gekennzeichnet, dass** die Radabschnitte des Rotors (17) des Betätigungssystems der Richtung und des Rotationsorgans (19) gezahnt sind.

9. Stellglied nach einem der vorangehenden Ansprüche, **dadurch gekennzeichnet, dass** das Rotationsorgan für eine Winkelverlagerung zwischen zwei extremen Positionen -α, +α konfiguriert ist, wobei der Winkelwert 2α zwischen 30 und 40° ist.

10. Stellglied nach einem der vorangehenden Ansprüche, **dadurch gekennzeichnet, dass** die Verlagerung des Verlagerungsmechanismus (14) im Verhältnis zum Drehzapfen (10) konfiguriert ist, um einen Neigungswinkel der Stützplatte (3) in einem Winkel -γ, +γ durchzuführen, wobei der Wert 2γ zwischen 10 und 20° ist.

11. Stellglied nach einem der vorangehenden Ansprüche, **dadurch gekennzeichnet, dass** die Motoren (11, 16) des Betätigungssystems der Neigung (4) und des Betätigungssystems der Richtung (5) einen Stator (13, 18) umfassen, der verbunden ist und ein einziges Teil bildet, das in einer Basis des Gehäuses montiert ist, wobei der Stator im Verhältnis zur Basis des Gehäuses befestigt ist.

12. Stellglied nach einem der vorangehenden Ansprüche, **dadurch gekennzeichnet, dass** die Motoren (11, 16) des Betätigungssystems der Neigung und des Betätigungssystems der Richtung Schrittmotoren sind, die Rotoren (12, 17) mit Dauermagneten umfassen.

13. Stellglied nach einem der vorangehenden Ansprüche, **dadurch gekennzeichnet, dass** das Rotationsorgan ein oder zwei Positionssensorelemente umfasst, die sich in Richtung des Bodens des Gehäuses erstrecken, wobei das Stellglied ferner eine Steuerelektronik (7) umfasst, die diese Positionssensoren (28) umfasst.

14. Stellglied nach einem der vorangehenden Ansprüche, **dadurch gekennzeichnet, dass** es eine Steuerelektronik umfasst, die eine Leiterplatte (25) umfasst, die auf dem Boden einer Basis (32) des Gehäuses (2) unter dem Stator und Rotor der Betätigungssysteme angeordnet ist.

15. Stellglied nach einem der vorangehenden Ansprüche, **dadurch gekennzeichnet, dass** die Stützplatte Schaufeln umfasst, die einen Radiator (38) für die Kühlung der Lichtquellen bilden, wobei der Radiator auf der gegenüberliegenden Seite der Lichtquellen angeordnet ist.

## Claims

1. An actuator for a vehicle headlamp (1) comprising a housing (2), at least one supporting plate (3) for one or several light sources, the plate being pivotally mounted relatively to the housing, around a pivot (10), and a tilt actuation system (4) comprising a motor (11) and a displacement mechanism, the displacement mechanism comprising a tilt actuation rod (9) coupled with a supporting plate (3) and configured for pivoting the supporting plate around the pivot (10), the actuator further comprising a steering actuation system (5) comprising a motor (16) with a rotor (17) comprising a wheel portion, and a rotary member (19) on which the supporting plate (3) is mounted through said pivot (10), the rotary member comprising a wheel portion (29) coupled with the wheel portion (30) of the rotor (17) for angular movement of the rotary member (19) in a direction orthogonal to an axial displacement direction (A) of the tilt actuation rod, **characterized in that** the rotary member (19) comprises a pivot portion (21) pivotally mounted around the tilt actuation rod (9).

2. The actuator according to claim 1, **characterized in that** the displacement mechanism comprises a screw-nut system comprising a screw (14) forming a portion of the actuation rod (9) and a nut (15) driven by the motor (11).

3. The actuator according to claim 2, **characterized in that** the screw comprises anti-rotation means for ensuring its linear displacement along an axis A co-operating with antirotation means in the form of a slide belonging to the housing (2).

4. The actuator according to claim 2 or 3, **characterized in that** it comprises at least one bearing (37) positioned between a portion of the housing and the pivot portion (21).

5. The actuator according to the preceding claim, **characterized in that** it comprises at least one bearing (45a) positioned between the pivot portion (21) and the nut.

6. The actuator according to one of the preceding claims, **characterized in that** the coupling (6), connecting the rod (9) of the tilt actuation system (4) to the supporting plate (3), comprises a ball-joint (24, 27) configured for allowing rotation in all directions of the supporting plate relatively to the rod.

7. The actuator according to one of the preceding claims, **characterized in that** the displacement mechanism of the tilt actuation system (4) is coupled with the supporting plate (3) by means of a coupling (6) comprising a slide (23) configured for allowing translation of the supporting plate relatively to the coupling (6).

8. The actuator according to one of the preceding claims, **characterized in that** the wheel portions of the rotor (17) of the steering actuation system and of the rotary member (19) are toothed.

9. The actuator according to one of the preceding claims, **characterized in that** the rotary member is configured for angular displacement between two extreme positions -α, +α, the angular value 2α being between 30 and 40°.

10. The actuator according to one of the preceding claims, **characterized in that** the displacement of the displacement mechanism (14) is configured relatively to the pivot (10) for forming a tilt angle of the supporting plate (3) of an angle -γ, +γ, the value 2γ being between 10 and 20°.

11. The actuator according to one of the preceding claims, **characterized in that** the motors (11, 16) of the tilt actuation system (4) and of the steering actuation system (5) comprise a common stator (13, 18) and forming a single part mounted in a base of the housing, the stator being fixed relatively to the base of the housing.

12. The actuator according to one of the preceding claims, **characterized in that** the motors (11, 16) of the tilt actuation system and of the steering actuation system are stepping motors comprising rotors (12, 17) with permanent magnets.

13. The actuator according to one of the preceding claims, **characterized in that** the rotary member comprises one or two position sensor elements extending towards the bottom of the housing, the actuator further comprising control electronics (7) comprising these position sensors (28).

14. The actuator according to one of the preceding claims, **characterized in that** it comprises control electronics comprising a circuit wafer (25) positioned at the bottom of a base (32) of the housing (2), under the stator and rotor of the actuation systems.

15. The actuator according to one of the preceding claims, **characterized in that** the supporting plate comprises blades forming a radiator (38) for cooling the light sources, the radiator being positioned on the side opposite to the light sources.
